# EUROPÄISCHE PATENTSCHRIFT

(11) **EP 0 932 533 B1**
(45) Veröffentlichungstag und Bekanntmachung des Hinweises auf die Patenterteilung: **05.09.2001**
(21) Anmeldenummer: 97909352.3
(22) Anmeldetag: 02.10.1997
(51) Int. Cl.: B60S 1/08, B60S 1/58

(54) **EINRICHTUNG ZUR STEUERUNG EINER WISCH- UND/ODER WASCHANLAGE FÜR EINE HECKSCHEIBE**
WINDSCREEN WIPER AND/OR WASHER SYSTEM CONTROL DEVICE
DISPOSITIF DE COMMANDE D'UN SYSTEME D'ESSUI-GLACE ET/OU DE LAVAGE POUR LUNETTE ARRIERE

(30) Priorität: 26.10.1996 DE 19644553
(43) Veröffentlichungstag der Anmeldung: 04.08.1999
(73) Patentinhaber: Valeo Auto-Electric Wischer und Motoren GmbH, 74321 Bietigheim-Bissingen (DE)
(72) Erfinder: CRISTOFARO, Salvador, D-73114 Schlat (DE); SCHULER, Thomas, D-75446 Wiernsheim (DE)
(74) Vertreter: Dreiss, Fuhlendorf, Steimle & Becker
(86) Internationale Anmeldenummer: EP9705424
(87) Internationale Veröffentlichungsnummer: WO9818664

(56) Entgegenhaltungen:
- WO-A-92/18358
- WO-A-93/02883
- PATENT ABSTRACTS OF JAPAN vol. 009, no. 046 (M-360), 27.Februar 1985 & JP 59 184044 A (NISSAN JIDOSHA KK), 19.Oktober 1984,
- PATENT ABSTRACTS OF JAPAN vol. 016, no. 399 (M-1300), 24.August 1992 & JP 04 133842 A (JIDOSHA DENKI KOGYO CO LTD), 7.Mai 1992,
- PATENT ABSTRACTS OF JAPAN vol. 006, no. 207 (M-165), 19.Oktober 1982 & JP 57 114744 A (NIPPON DENSO KK), 16.Juli 1982,

## Beschreibung

Die Erfindung betrifft eine Einrichtung zur Steuerung einer Wisch- und/oder Waschanlage für Scheiben von Kraftfahrzeugen gemäß dem Oberbegriff des Anspruchs 1.

Derartige Anlagen sind vielfältig bekannt, beispielsweise aus der JP-A-04 133 842. Bei dieser einrichtung wird ein Heckscheibenwischer dann aktiviert, wenn erstens der Frontscheibenwischer aktiv ist, d.h. der Betätigungsschalter für den Frontscheibenwischer an ist, zweitens der Rückwärtsgang eingelegt wird. Dies verschafft dem Fahrer eine Erleichterung, da er beim Rückwärtsfahren keinen Heckscheibenwischer mehr betätigen muß. Aus der WO-A-92 18 358 ist bkannt, einen Frontscheibenwischer in Abhängigkeit des Signals eines Feuchtigkeitssensors zu betätigen.

Vielfach ist es nun so, daß die Bedienungsperson ein Fahrzeug startet und wegfährt, obwohl die Scheibe verschmutzt ist und möglicherweise die Waschanlage auch nicht mit Wasser gefüllt ist. Die Verschmutzung der Scheibe wird insbesondere bei Nachtfahrten und beim Starten in heller Umgebung nicht bemerkt. Erst bei Fahrten durch die Dunkelheit oder bei Blendwirkung durch den Gegenverkehr wird die Verschmutzung bemerkt. Zu diesem Zeitpunkt kann es aber schon zu erheblichen Gefahrensituationen gekommen sein. Weiterhin ist oft zu beobachten, daß besonders bei älteren Personen das Rückwärtsfahren ihres Fahrzeugs eine Extremsituation darstellt, auf die sie sich voll konzentrieren müssen. Regnet es nun zusätzlich und ist die Sicht "nach hinten" beeinträchtigt, sind viele Fahrer überfordert oder sie vergessen es einfach, vorher die Heckwischanlage zu aktivieren. Diese Verhaltensweise birgt auch ein gewisses Gefahrenpotential, welches durch eine Automatisierung verringert werden kann und somit zur Steigerung der Sicherheit beiträgt.

Aufgabe der Erfindung ist es daher, dafür zu sorgen, daß beim Starten des Fahrzeugs und/oder Einlegen des Rückwärtsganges vorsorglich für eine klare Sicht durch die Scheiben des Fahrzeugs gesorgt wird.

Die Aufgabe wird durch eine Einrichtung zur Steuerung einer Wisch- und/oder Waschanlage gelöst, die die Merkmale des Anspruchs 1 aufweist.

Die Erfindung besteht im wesentlichen darin, die Benetzung und/oder Verschmutzung der Scheibe und den Startvorgang und/oder das Einlegen des Rückwärtsgangs selbst zum Auslösen der Wisch- und/oder Waschanlage zu nutzen. Der Erfolg besteht sowohl darin, daß der Start der Fahrt bzw. die Rückwärtsfahrt bei klarer Sicht unternommen wird und gleichzeitig die Anlage auf ihre Arbeitsfähigkeit getestet wird. Hinsichtlich der Waschanlage kann beispielsweise der Wasserbehälter leer oder das dort befindliche Wasser eingefroren sein. Auch hinsichtlich der Wischanlage kann sich herausstellen, daß diese nicht korrekt arbeitet.

Da die Anlage sich automatisch einschaltet, empfiehlt sich in Weiterbildung der Erfindung die Merkmalskombination nach Anspruch 2, gemäß der nach einem geeigneten Zeitraum die Wisch- und/oder Waschanlage wieder selbsttätig abgeschaltet wird, wobei die Abschaltung erst dann vorgenommen werden sollte, wenn die Sicht auf der oder den Scheiben hinreichend frei ist.

Ein eventuell vorhandener Intervall des Heckwischers wird unterbrochen. Befindet sich die Heckwischanlage im Intervallbetrieb kann es unter Umständen einige Sekunden dauern, bis ein Wischvorgang ausgelöst wird. Um nun hier ein sofortiges Wischen auszulösen kann man die Merkmale gemäß Anspruch 5 anwenden.

Vielfach kann es Schwierigkeiten bedeuten, beim Starten eines Fahrzeugs die richtige Kombination von Wisch- und Waschanlage einzustellen bzw. von beiden die jeweils angemessene Arbeitsweise (Frequenz, Arbeitsdauer) einzustellen. In diesem Falle empfiehlt sich in Weiterbildung der Erfindung die Merkmalskombination nach Anspruch 4.

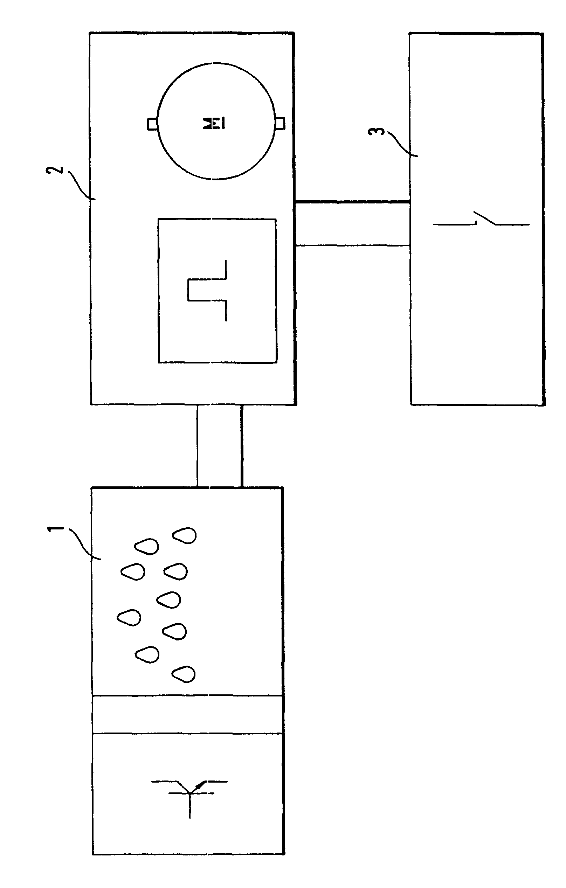

Ein Ausführungsbeispiel der Erfindung wird nachfolgend anhand der Zeichnung dargestellt, die in symbolischer Darstellung einen Heckwischer 2, der von einem Regensensor 1 und einem Schalter 3 ansteuerbar ist, dessen Schaltstellung von der Einlegung des Rückwärtsgangs abhängt, zeigt. Unabhängig von der sonstigen manuellen Betätigungsmöglichkeit des Heckwischers wird dieser dann eingeschaltet, wenn der Regensensor eine Benetzung der Frontscheibe feststellt und gleichzeitig der Schalter 3 bei eingelegtem Rückwärtsgang geschlossen ist.

## Patentansprüche

1. Einrichtung zur Steuerung einer Wisch- und/oder Waschanlage (2) für Scheiben, insbesondere von Kraftfahrzeugen, gekennzeichnet, durch
- eine Sensoreinrichtung (1) zum Messen der Benetzung und/oder Verschmutzung der Scheibe,
- eine Einrichtung zum Erfassen der Betätigung des Zündschlüssels bzw. des Rückwärtsgangs (3), und
- einer von der Schaltstellung des Scheibenwischerschalters unabhängigen Einrichtung zum Betätigen der Anlage dann,
a. wenn die Sensoreinrichtung (1) eine Benetzung und/oder Verschmutzung der Scheibe feststellt, und
b. der Zündschlüssels betätigt bzw. der Rückwartsgangs (3) eingelegt wird.

2. Einrichtung nach Anspruch 1, **dadurch gekennzeichnet,** daß sie die Wisch- und/oder Waschanlage für einen von dem Grad der Benetzung und/oder Verschmutzung vorgegebenen Zeitraum einschaltet.

3. Einrichtung nach Anspruch 1 oder 2, **dadurch gekennzeichnet,** daß zumindest der die Heckscheibe betätigende Teil (2) der Anlage eingeschaltet wird.

4. Einrichtung nach einem der vorhergehenden Ansprüche, **dadurch gekennzeichnet,** daß die Frequenz bzw. die Dauer des Wisch- und/oder Waschvorgangs von dem Grad der Verschmutzung und/oder Benetzung der Scheibe abhängt.

5. Einrichtung nach einem der vorhergehenden Ansprüche, **dadurch gekennzeichnet,** daß eine vorhandene Intervallschaltung unterbrochen und die Anlage in Tätigkeit gesetzt wird.

## Claims

1. Device for controlling a wiper and/or washer mechanism (2) for windows, especially for motor vehicles, characterized by a
- sensor element (1) for measuring the wetting and/or dirtying of the window,
- a system for sensing the activation of the ignition key or the reverse gear (3),
- a system, being independent from the position of the switch of the window wiper, for activating the mechanism, when
a. the sensor element (1) senses a wetting and/or dirtying of the window, and
b. the ignition key or the reverse gear (3) is activated.

2. Device according to claim 1, **characterized in that** it activates the wiper and/or washer mechanism for a period of time determined by the degree of wetness and/or dirtiness.

3. Device according to claim 1 or 2, **characterized in that** at least the part (2) of the system responsible for the rear window is activated.

4. Device according to one of the preceding claims, **characterized in that** the frequency or the duration of the wiper and/or washer cycle depends upon the degree of the dirtiness and/or moisture on the window.

5. Device according to one of the preceding claims, **characterized in that** an existing intermittent setting is interrupted and the system is set into operation.

## Revendications

1. Dispositif pour la commande d'une installation d' essuie-glace et/ou de lave-glace (2) pour les vitres, en particulier de véhicules, caractérisé par
- un capteur (1) de mesure de l'humectation et/ou de l'encrassement de la vitre,
- un système pour l'enregistrement de la commande de la clé de contact ou de la marche arrière (3), et
- un système indépendant de la position de commande de l'interrupteur d'essuie-glace pour l'actionnement de l'installation dans les cas où
a. le capteur (1) constate une humectation et/ou un encrassement de la vitre, et
b. la clé de contact est actionnée ou la marche arrière (3) est enclenchée.

2. Dispositif selon la revendication 1, **caractérisé en ce qu**'il enclenche l'essuie-glace et/ou le lave-glace pour un laps de temps prédéfini par le degré de l'humectation et/ou de l'encrassement.

3. Dispositif selon la revendication 1 ou 2, **caractérisé en ce qu**'au moins la partie (2) de l'installation qui actionne la lunette arrière est mise en route.

4. Dispositif selon l'une quelconque des revendications précédentes, **caractérisé en ce que** la fréquence ou la durée de l'opération d'essuyage et/ou de lavage dépend du degré de l'encrassement et/ou de l'humectation de la vitre.

5. Dispositif selon l'une quelconque des revendications précédentes, **caractérisé en ce qu**'un circuit intermittent pré-existant est interrompu et l'installation est mise en service.
